# EUROPÄISCHE PATENTSCHRIFT

(11) **EP 1 156 978 B1**
(45) Veröffentlichungstag und Bekanntmachung des Hinweises auf die Patenterteilung: **21.01.2004**
(21) Anmeldenummer: 00916852.7
(22) Anmeldetag: 21.02.2000
(51) Int. Cl.: B66B 11/04

(54) **HEBEZEUGANTRIEB**
DRIVE FOR A LIFTING DEVICE
ENTRAINEMENT POUR ENGIN DE LEVAGE

(30) Priorität: 25.02.1999 DE 19908092
(43) Veröffentlichungstag der Anmeldung: 28.11.2001
(73) Patentinhaber: ZF FRIEDRICHSHAFEN Aktiengesellschaft, 88038 Friedrichshafen (DE)
(72) Erfinder: BUCK, Gerhard, D-88048 Friedrichshafen (DE); MANN, Egon, D-88045 Friedrichshafen (DE)
(86) Internationale Anmeldenummer: PCT/EP2000/001401
(87) Internationale Veröffentlichungsnummer: WO 2000/050330

(56) Entgegenhaltungen:
- DE-A- 4 323 361
- FR-A- 511 877
- FR-A- 2 260 526
- US-A- 5 002 157
- US-A- 5 435 209

## Beschreibung

Die Erfindung betrifft einen Hebezeugantrieb mit antreibendem Motor, Planetengetriebe und Bremse nach dem Oberbegriff des ersten Anspruches.

Ein derartiger Hebezeugantrieb ist bereits aus der FR-A-2 260 526 bekannt.

Hebezeugantriebe für Personen und Güter sind weit verbreitet, z. B. als Aufzüge, Seilwinden usw. Da sich die Aufzüge mit niedrigen Geschwindigkeiten bewegen, ist die Drehzahl der Abtriebswelle des Hebezeugantriebs entsprechend niedrig. Die erforderlichen Drehmomente können von Elektromotoren mit günstigem Wirkungsgrad nicht direkt zur Verfügung gestellt werden, sondern erfordern ein nachgeschaltetes Untersetzungsgetriebe. Die Bremsen, welche die Aufgabe haben, den Hebezeugantrieb abzubremsen, müßten ohne Untersetzungsgetriebe in der Lage sein, das Abtriebsdrehmoment zu bremsen bzw. zu halten und würden einen erheblichen Bauraum benötigen. Da die Aufzugkabine entstehende Geräusche verstärkt, ist der Hebezeugantrieb besonders laufruhig zu gestalten. Alle Bestandteile des Antriebs sind oftmals unter schwierig zugänglichen Bedingungen auf engstem Raum zu installieren. Besteht die Möglichkeit, den Hebezeugantrieb im Aufzugschacht zu installieren, kann der sonst notwendige Maschinenraum entfallen. Diese Hebezeugantriebe für maschinenraumlose Aufzüge müssen eine extrem kurze Baulänge aufweisen. Im Servicefall sollte zumindest der Elektromotor abbaubar sein, ohne daß der komplette Hebezeugantrieb von der Aufzugkabine getrennt werden muß.

Ein Antrieb der eingangs beschriebenen Art ist in der DE 31 12 090 A1 offenbart. Dieser Antrieb besteht aus einem hoch übersetzenden Getriebe mit geringer Zahndifferenz zwischen dem befestigten Festrad und dem Abtriebsrad der Seilscheibe. Diese Art des Untersetzungsgetriebes erfordert bei einer Umdrehung der Seilscheibe eine Vielzahl von Zahneingriffen. Da jeder Zahneingriff im Hebezeugantrieb eine Schwingungsanregung und somit Geräusch erzeugt, sind bei diesem Hebezeugantrieb besondere geräuschdämpfende Maßnahmen erforderlich. Dem hoch übersetzenden Getriebe ist in axialer Richtung ein Innenläufer-Elektromotor und eine Bremse nachgeschaltet, wobei die Wicklung des Innenläufer-Motors direkt an der Trennwand des Motors zum Untersetzungsgetriebe angeordnet ist. Dadurch wird das Untersetzungsgetriebe zusätzlich durch die Verlustwärme der Motorwicklung erwärmt. Dies führt zu einer ungünstigen Temperaturentwicklung im Getriebe. Indem die Bremse einerseits am Motorgehäuse und die Lagerung der Treibscheibe andererseits am Getriebegehäuse angebracht sind, ist die axiale Erstrekkung dieses Hebezeugantriebs groß.

Aus der DE 197 39 001 C1 ist ein Aufzugantrieb offenbart, bei welchem die Bremse des Aufzugantriebs nicht dem Antriebsmotor nachgeschaltet angeordnet ist, sondern innerhalb der axialen Erstreckung des Antriebs auf eine Trommel wirkt. Da diese Trommel gleichzeitig die Aufgabe des Außenläufers des Elektromotors wahrnimmt, ist bei diesem Antrieb ein gleichbleibender Wirkungsgsrad nicht gegeben, da durch die Wärmeeinwirkung der Bremse die Außenläufertrommel erwärmt wird und sich der Spalt zwischen Wicklung und Außenläufer verändert.

Der vorliegenden Erfindung liegt die Aufgabe zugrunde, einen Hebezeugantrieb zu schaffen, welcher sich in axialer Länge durch eine kompakte Bauform auszeichnet, wenig Geräuschemission erzeugt, einen gleichbleibenden Wirkungsgrad aufweist sowie im Servicefall mit geringem Aufwand zugänglich ist.

Die Aufgabe wird mit einem, auch die kennzeichnenden Merkmale des Hauptanspruchs aufweisenden, gattungsgemäßen Hebezeugantrieb gelöst.

Erfindungsgemäß wird als Untersetzungsgetriebe ein Planetengetriebe mit Doppelplaneten verwendet, welches sich dadurch auszeichnet, daß die benötigte Übersetzung mit einer geringen Anzahl von Zahneingriffen und somit einer geringen Geräuschemission erreicht wird. Die Bremse des Hebezeugantriebs ist axial zwischen dem Elektromotor und dem Untersetzungsgetriebe angeordnet, wobei die Bremse den Elektromotor glockenförmig umgibt und die Reibfläche der Bremse sich innerhalb der axialen Erstreckung des Elektromotors befindet. Die Bremse steht in Verbindung mit der Welle des Antriebsmotors. Indem die Bremse das innere Zentralrad des Untersetzungsgetriebes abbremst und somit dem Untersetzungsgetriebe vorgeschaltet ist, kann die Bremse kleiner dimensioniert werden. Da die Bremse sich zwischen dem Untersetzungsgetriebe und dem Antriebsmotor befindet, die Reibfläche der Bremse sich im Bereich des Antriebsmotors befindet, wird verhindert, daß der Antriebsmotor seine Verlustwärme an das Getriebe abgibt. Indem sich die Reibfläche der Bremse innerhalb der axialen Erstreckung des Antriebsmotors befindet, ist es möglich, eine sehr kompakte Antriebseinheit zu schaffen. Da die Bremse unabhängig vom Elektromotor angeordnet ist, ist gewährleistet, daß der Spalt zwischen Rotor und Stator auch bei Erwärmung der Bremse gleichbleibend und somit ein konstanter Wirkungsgrad des Elektromotors gegeben ist. Das Untersetzungsgetriebe ist an ein Ständergehäuse angeschraubt, welches einerseits die Betätigungseinrichtung der Bremse aufnimmt und andererseits Möglichkeiten zur Befestigung des Hebezeugantriebs, vorzugsweise im Aufzugschacht, aufweist. In das Ständergehäuse ist der Antriebsmotor eingeschoben und kann im Servicefall, ohne daß der Hebezeugantrieb von der Aufzugkabine getrennt werden muß, entnommen werden. Der Antriebsmotor ist an seiner dem Untersetzungsgetriebe abgewandten Seite dergestalt ausgeführt, daß ein Drehzahlgeber, vorzugsweise ein Inkrementalgeber, innerhalb der axialen Erstreckung des Antriebsmotors auf der Abtriebswelle des Antriebsmotors angebracht werden kann. Die Abschlußwand des Untersetzungsgetriebes zur Bremse ist so ausgeführt, daß die Kräfte der Treibscheibe des Hebezeugantriebs über eine Lagerung aufgenommen werden können sowie daß diese Abschlußwand die Hohlradverzahnung der Doppelplanetenstufe aufnimmt und daß diese Abschlußwand die Abdichtung und Lagerung der Antriebswelle des Untersetzungsgetriebes beinhaltet. Die Lagerung der Treibscheibe ist in radialer Richtung über die radiale Erstreckung der Doppelplanetenstufe gestellt, so daß sie in axialer Richtung im Bereich der Doppelplanetenstufe, mindestens jedoch ein Teil der Lagerung der Treibscheibe innerhalb der axialen Erstreckung der Doppelplanetenstufe, angeordnet werden kann. Indem die Lagerung der Treibscheibe im Bereich der Doppelplanetenstufe angeordnet werden kann, ist es möglich, in axialer Richtung einen sehr kompakten Antrieb zu schaffen. Die Antriebswelle des Untersetzungsgetriebes, welche mit der Abtriebswelle des Antriebsmotors verbunden ist, kann mit dieser auch einstückig ausgeführt sein. Alle Kräfte, welche auf die Abschlußwand wirken, werden auf das Ständergehäuse übertragen, welches mit der Abschlußwand in Verbindung steht. Das Ständergehäuse kann in radialer Richtung zwei gegenüberliegende Öffnungen aufweisen, durch welche zwei Bremsbacken über Federkraft auf die Bremstrommel wirken bzw. die Bremsbacken betätigt werden können. Im Servicefall können dann diese Bremsbacken nach außen abgenommen werden, ohne daß weitere wesentliche Teile des Hebezeugantriebs entfernt werden müssen.

Weitere vorteilhafte Ausgestaltungen sind den Ausführungsbeispielen zu entnehmen.
Es zeigen:
- Fig. 1: einen Schnitt durch einen Hebezeugantrieb in Längsrichtung und
- Fig. 2: einen Schnitt durch einen Hebezeugantrieb in Querrichtung.

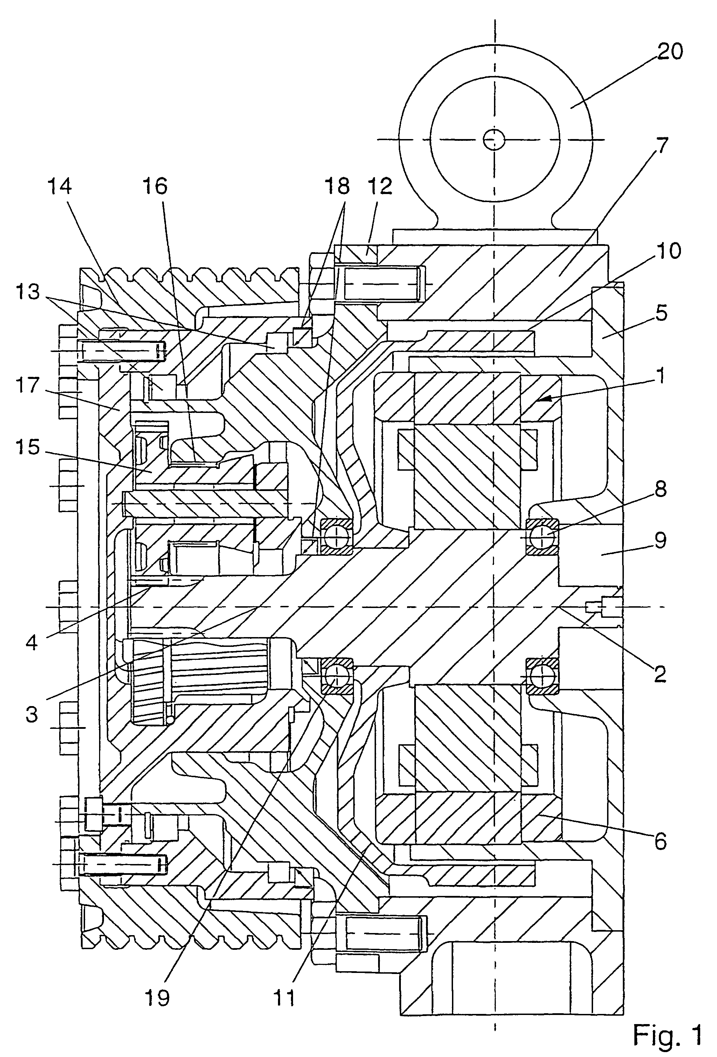

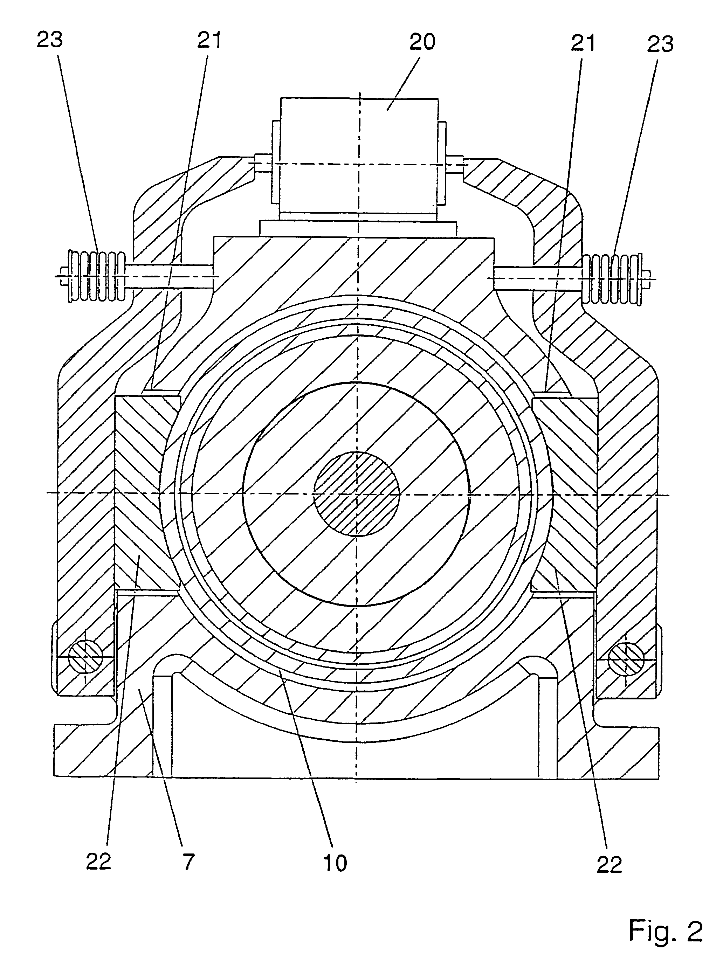

Fig. 1 zeigt einen Hebezeugantrieb, bei welchem ein Innenläufer-Elektromotor 1 eine Abtriebswelle 2 antreibt, welche wiederum eine Antriebswelle 3 mit einem inneren Zentralrad 4 eines Planetengetriebes antreibt. Die Abtriebswelle 2, die Antriebswelle 3 und das innere Zentralrad 4 können wahlweise einzeln oder einstückig ausgeführt sein. Der Elektromotor 1 ist mit einem Deckel 5, welcher die Wicklung 6 des Elektromotors 1 aufnimmt, in ein Ständergehäuse 7 eingeschoben und drehfest befestigt. Der Deckel 5 besitzt eine Lagerung 8, mittels welcher eine Seite der Abtriebswelle 2 gelagert ist. Der Deckel 5 weist eine Öffnung 9 auf, in welche ein Drehzahlgeber innerhalb der axialen Erstreckung des Hebezeugantriebs eingebaut werden kann. Das Ständergehäuse 7 weist in Fig. 2 dargestellte Öffnungen 21 auf, durch welche Bremsbacken 22 auf die Reibfläche 10 einer Bremse 11 einwirken können. Die Bremse 11 steht in Verbindung mit der Abtriebswelle 2 und umschließt den Elektromotor 1 glockenförmig. Die Bremse 11 ist in axialer Richtung zwischen der Wicklung 6 des Elektromotors 1 und der Abschlußwand 12 des Untersetzungsgetriebes angeordnet. Die Bremse kann auch als Scheibenbremse ausgeführt sein. Die Abschlußwand 12 ist drehfest mit dem Ständergehäuse 7 verbunden und nimmt über eine Lagerung 13 die Kräfte der Seilscheibe 14 auf. Das innere Zentralrad 4 treibt Doppelplanetenräder 15 an, welche in kämmender Verbindung mit einem feststehenden Hohlrad 16 steht. Vorzugsweise ist die Planetenstufe mit einer Schrägverzahnung ausgeführt, um einen geräuscharmen Betrieb zu ermögichen. Der Steg 17 ist der Abtrieb der Doppelplanetenstufe und steht in Verbindung mit der Seilscheibe 14. Das Untersetzungsgetriebe weist einen geschlossenen Ölraum auf, welcher durch Dichtungsmittel 18 abgedichtet wird. Die Antriebswelle 3 oder die Abtriebswelle 2 werden mit Hilfe einer Lagerung 19 in der Abschlußwand 12 gelagert. Die Abschlußwand 12 einerseits und der Deckel 5 andererseits bilden die äußeren Berandungen des Raumes, welcher die Bremse 11 und den Elektromotor 1 beinhalten. Das Ständergehäuse 7 weist eine Betätigungseinrichtung 20 für die Bremse auf sowie Befestigungsmittel, um den Hebezeugantrieb auf und an ortsfesten Unterlagen zu befestigen.

Fig. 2 zeigt die Anordnung der Bremse, bei welcher Federn 23 die Bremsbacken 22 auf die Reibfläche 10 drücken. Über die Betätigungsmittel 20 können die Bremsbacken 22 gegen die Federkraft gelöst werden.
Indem die Bremse durch Öffnungen 21 eingreift, ist es möglich, nach Lösen der Federn 23 im Wartungsfall die Bremsbacken 22 nach außen zu schwenken, ohne weitere Demontagen am Antrieb durchführen zu müssen.

### Bezugszeichen

- 1: Elektromotor
- 2: Abtriebswelle
- 3: Antriebswelle
- 4: inneres Zentralrad
- 5: Deckel
- 6: Wicklung
- 7: Ständergehäuse
- 8: Lagerung
- 9: Öffnung
- 10: Reibflache
- 11: Bremse
- 12: Abschlußwand
- 13: Lagerung
- 14: Seilscheibe
- 15: Doppelplanetenrad
- 16: Hohlrad
- 17: Steg
- 18: Dichtungsmittel
- 19: Lagerung
- 20: Betätigungsmittel
- 21: Öffnung
- 22: Bremsbacken
- 23: Feder

## Patentansprüche

1. Hebezeugantrieb, bei welchem ein Antriebsmotor (1) ein Untersetzungsgetriebe antreibt und über eine Bremse (11) bremsbar ist, wobei das Untersetzungsgetriebe ein Planetengetriebe mit Doppelplaneten (15) ist und eine innere Zentralwelle (3) des Planetengetriebes von einem Antriebsmotor (1) angetrieben wird, wobei ein Planetenträger (17) einen Abtrieb bildet, **dadurch gekennzeichnet, daß** mindestens ein Teil einer Lagerung (13), welche mit dem Abtrieb in Verbindung steht, in radialer Richtung außerhalb der Doppelplaneten (15) und innerhalb der axialen Erstreckung der Doppelplaneten (15) angeordnet ist.

2. Hebezeugantrieb nach Anspruch 1, **dadurch gekennzeichnet, daß** die Bremse (11) dem Untersetzungsgetriebe vorgeschaltet ist.

3. Hebezeugantrieb nach Anspruch 1, **dadurch gekennzeichnet, daß** der Antriebsmotor (1) innerhalb eines Ständergehäuses (7) angeordnet ist.

4. Hebezeugantrieb nach Anspruch 1, **dadurch gekennzeichnet, daß** ein Raum, in welchem sich der Antriebsmotor ((1) befindet, einerseits durch einen Deckel (5), welcher eine Wicklung (6) eines Elektromotors beinhaltet und andererseits durch eine Abschlußwand (12), welche über eine Lagerung (13) die Kräfte einer Seilscheibe (14) aufnimmt und mit einem Hohlrad (16) in Verbindung steht, begrenzt wird.

5. Hebezeugantrieb nach Anspruch 1, **dadurch gekennzeichnet, daß** das Untersetzungsgetriebe einen geschlossenen Schmierflüssigkeitsraum aufweist, welcher über Dichtungsmittel (18), welche auf einer Abschlußwand (12), die über eine Lagerung (13) die Kräfte einer Seilscheibe (14) aufnimmt und mit einem Hohlrad (16) in Verbindung steht, abgedichtet wird.

6. Hebezeugantrieb nach Anspruch 1, **dadurch gekennzeichnet, daß** ein Ständergehäuse (7) sich gegenüberliegende Öffnungen (21) besitzt, durch welche mindestens ein Bremsbacken (22), welcher von außerhalb des Hebezeugantriebs zugänglich ist, auf eine Bremse (11) einwirkt.

7. Hebezeugantrieb nach Anspruch 1, **dadurch gekennzeichnet, daß** eine Bremse (11) in axialer Richtung zwischen dem Untersetzungsgetriebe und dem Antriebsmotor (1) angeordnet ist.

8. Hebezeugantrieb nach Anspruch 1, **dadurch gekennzeichnet, daß** ein Ständergehäuse (7) Mittel zur Befestigung des Hebezeugantriebs aufweist.

## Claims

1. Elevator drive, in which a drive motor (1) drives a reduction gear unit and can be braked by a brake 11), wherein the reduction gear unit is a planetary gear unit with dual planet wheels (15), and an inner central wheel (3) of the planetary gear unit is driven by a drive motor (1), wherein a planet carrier (17) forms an output drive, **characterised in that** at least a part of a mounting (13), which is connected to the output drive, is disposed outside of the dual planet wheels (15) and within the axial extent of the dual planet wheels (15) in the radial direction.

2. Elevator drive according to Claim 1, **characterised in that** the brake (1) is connected upstream of the reduction gear unit.

3. Elevator drive according to Claim 1, **characterised in that** the drive motor (1) is disposed inside a stator housing (7).

4. Elevator drive according to Claim 1, **characterised in that** a space in which the drive motor (1) is located is bounded on one side by a cover (5), which contains a winding (6) of an electric motor, and on the other by a closing wall (12), which takes up the forces of a rope pulley (14) via a mounting (13) and is connected to a ring gear (16).

5. Elevator drive according to Claim 1, **characterised in that** the reduction gear unit comprises a closed lubricant reservoir sealed by sealing means (18), which are placed on a closing wall (12), which takes up the forces of a rope pulley (14) via a mounting (13) and is connected to a ring gear (16).

6. Elevator drive according to Claim 1, **characterised in that** a stator housing (7) comprises opposite openings (21), through which at least one brake shoe (22), which is accessible from outside of the elevator drive, acts on a brake (11).

7. Elevator drive according to Claim 1, **characterised in that** a brake (11) is disposed between the reduction gear unit and the drive motor (1) in the axial direction.

8. Elevator drive according to Claim 1, **characterised in that** a stator housing (7) comprises means for fastening the elevator drive.

## Revendications

1. Système de transmission pour engins de levage, dans lequel un moteur de traction (1) entraîne un réducteur, celui-ci pouvant être freiné au moyen d'un frein (11), sachant que le réducteur est un réducteur planétaire doté de satellites doubles (15) et sachant qu'un arbre central (3) monté à l'intérieur du réducteur planétaire est entraîné par un moteur de traction (1), sachant qu'un arbre porte-satellites (17) forme une sortie, **caractérisé en ce que** au moins une partie d'un palier (13), celui-ci étant lié à la sortie, est disposée, dans le sens radial, à l'extérieur des satellites doubles (15) et à l'intérieur de l'extension axiale des satellites doubles (15).

2. Système de transmission pour engins de levage selon la revendication 1,
**caractérisé en ce que** le frein (11) est monté en amont du réducteur.

3. Système de transmission pour engins de levage selon la revendication 1,
**caractérisé en ce que** le moteur de traction (1) est disposé à l'intérieur d'un carter de stator (7).

4. Système de transmission pour engins de levage selon la revendication 1,
**caractérisé en ce que** un espace, dans lequel se trouve le moteur de traction (1), est limité, d'un côté, par un couvercle (5) contenant un bobinage (6) d'un moteur électrique et, de l'autre côté, par une paroi terminale (12) supportant par l'intermédiaire d'un palier (13) les forces d'une poulie, et étant liée à une couronne (16).

5. Système de transmission pour engins de levage selon la revendication 1,
**caractérisé en ce que** le réducteur comporte un espace fermé pour le liquide de lubrification, cet espace étant étanchéifié à l'aide de bagues d'étanchéité (18), lesquelles sont liées à une couronne (16) et à une paroi terminale (12), supportant par l'intermédiaire d'un palier (13) les forces exercées par une poulie (14).

6. Système de transmission pour engins de levage selon la revendication 1,
**caractérisé en ce que** un carter de stator (7) possède des orifices opposés (21) à travers lesquels au moins une mâchoire de frein (22), étant accessible en dehors du système de transmission pour engins de levage, agit sur un frein (11).

7. Système de transmission pour engins de levage selon la revendication 1,
**caractérisé en ce que** un frein (11) est disposé dans le sens axial entre le réducteur et le moteur de traction (1).

8. Système de transmission pour engins de levage selon la revendication 1,
**caractérisé en ce que** un carter de stator (7) possède des moyens de fixation du système de transmission pour engins de levage.
